# EUROPÄISCHE PATENTANMELDUNG

(11) **EP 2 604 461 A1**
(43) Veröffentlichungstag der Anmeldung: **19.06.2013**
(21) Anmeldenummer: 12188628.7
(22) Anmeldetag: 16.10.2012
(51) Int. Cl.: B60K 26/02, B60W 10/08, B60W 10/02, B60W 30/18

(54) **Verzögerung und Beschleunigen eines Elektro- oder Hybridfahrzeugs mit einem Fahrpedal**

(30) Priorität: 12.12.2011 DE 102011088312
(71) Anmelder: ROBERT BOSCH GMBH, 70442 Stuttgart (DE)
(72) Erfinder: Ries-Mueller, Klaus, 74906 Bad Rappenau (DE)

(57) **Zusammenfassung**

Ein System für ein Fahrzeug (10) umfasst eine elektrische Maschine (12) zum Antrieb des Fahrzeugs (10) und ein Fahrpedal (14). Die elektrische Maschine (12) ist dazu ausgeführt ist, in einem Motorbetrieb das Fahrzeug (10) zu beschleunigen und in einem Generatorbetrieb das Fahrzeug (10) zu verzögern. Das Fahrpedal (14) weist einen Fahrpedalweg (30) mit einem Beschleunigungsbereich (40), einem Verzögerungsbereich (38) und einer dazwischenliegenden Neutralstellung (36) auf. Das System (10) ist dazu ausgeführt, bei einer Stellung des Fahrpedals (14) im Beschleunigungsbereich (40) das Fahrzeug (10) im Motorbetrieb zu beschleunigen und bei einer Stellung im Verzögerungsbereich (38) das Fahrzeug (10) im Generatorbetrieb zu verzögern. In der Neutralstellung (36) wird vorteilhaft ausgekuppelt.

## Beschreibung

### GEBIET DER ERFINDUNG

Die Erfindung betrifft ein System für ein Fahrzeug sowie ein Verfahren, ein Computerprogamm und ein computerlesbares Medium zum Steuern eines Fahrzeugs.

### HINTERGRUND DER ERFINDUNG

Elektro- oder Hybridfahrzeuge besitzen zum Antrieb häufig eine elektrische Maschine die als elektrischen Motor und als Generator betrieben werden kann. Analog zu einem Fahrzeug mit Verbrennungsmotor wird die Leistung der elektrischen Maschine in Abhängigkeit davon erhöht, wie weit der Fahrer ein Fahrpedal des Fahrzeugs durchdrückt. Sobald der Fahrer den Fuß vom Fahrpedal nimmt, kann die elektrische Maschine die Funktion eines Generators übernehmen, der den aus der Bewegungsenergie gewonnen Strom in die Fahrzeugbatterie zurückspeist. Dieser Vorgang wird auch Rekuperation genannt. Gleichzeitig entsteht dabei ein Bremsmoment, das zu einer wirksamen Verzögerung des Fahrzeugs führen kann.

Auf diese Weise können im Stadtverkehr rund 75 % aller Verzögerungsvorgänge ohne Aktivierung des Bremspedals absolviert werden. Erst wenn der Fahrer durch Tritt auf das Bremspedal eine höhere Verzögerung anfordert, greift zusätzlich die konventionelle Bremsanlage ein.

Die Verzögerung des Fahrzeugs durch den Elektromotor hängt davon ab, wie viel Bewegungsenergie in elektrische Energie umgewandelt wird. Es ist bekannt, das der Fahrer über drei Schaltstufen, die per Taster gewählt werden, die Verzögerung im Schubbetrieb, d.h. die Verzögerung des Elektromotors, variiert.

Seit langem sind aktive Fahrpedale bekannt, die beispielsweise bei zu dichtem Auffahren vibrieren bzw. eine Gegenkraft zur Kraft des Fahrers aufbringen. Ein aktives Fahrpedal kann beispielsweise einen Stellmotor umfassen, der die Gegenkraft aufbringt. Der Stellmotor kann etwa in die Vorspannung der Pedalrückholfeder eingreifen. Ein aktives Fahrpedal ist in der DE 103 24 811 A1 beschrieben.

### ZUSAMMENFASSUNG DER ERFINDUNG

Es ist Aufgabe der Erfindung das Bremsen eines Fahrzeugs mit einer elektrischen Maschine zu erleichtern.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein System für ein Fahrzeug, beispielsweise für ein Elektrofahrzeug oder ein Hybridfahrzeug.

Gemäß einer Ausführungsform der Erfindung umfasst das Fahrzeug einen Antrieb mit einer elektrischen Maschine und ein Fahrpedal zum Einstellen der Beschleunigung des Fahrzeugs durch einen Fahrer. Die elektrische Maschine ist dazu ausgeführt, in einem Motorbetrieb das Fahrzeug zu beschleunigen und in einem Generatorbetrieb das Fahrzeug zu verzögern. Beispielsweise kann das Fahrzeug dazu ausgeführt sein, die Leistung der elektrischen Maschine im Motorbetrieb in Abhängigkeit davon einzustellen, wie weit der Fahrer das Fahrpedal durchgedrückt hat.

Gemäß einer Ausführungsform der Erfindung weist das Fahrpedal einen Fahrpedalweg mit einem Beschleunigungsbereich, einem Verzögerungsbereich und einer dazwischenliegenden Neutralstellung auf. Das System ist dabei dazu ausgeführt, bei einer Stellung des Fahrpedals im Beschleunigungsbereich das Fahrzeug im Motorbetrieb zu beschleunigen und bei einer Stellung im Verzögerungsbereich das Fahrzeug im Generatorbetrieb zu verzögern.

Das System kann also dazu ausgeführt sein, bei einer Stellung des Fahrpedals oberhalb der Neutralstellung im Motorbetrieb zu beschleunigen und in einer Stellung unterhalb der Neutralstellung im Generatorbetrieb zu verzögern. Das Fahrpedal kann also zum Einstellen der Rekuperation und damit der Verzögerung bei dem elektrischen Antrieb benutzt werden. Dabei ist zu verstehen, dass die Begriffe oberhalb und unterhalb nicht räumlich verstanden werden müssen, sondern sich auf eine Anordnung der Bereiche relativ zum Fahrpedalweg beziehen.

Durch die beispielsweise je nach Fahrsituation einstellbare Rekuperation kann der Verbrauch des Fahrzeugs gesenkt werden. Außerdem kann die über das Fahrpedal einstellbare Verzögerung einen Komfortgewinn für den Fahrer bedeuten.

Das System kann eine Steuerung umfassen, die den Betrieb der elektrischen Maschine steuert. Das Fahrpedal kann einen Fahrpedalwegsensor aufweisen, der ein Signal an die Steuerung sendet, das kodiert, welche Stellung das Fahrpedal aktuell einnimmt. Die Steuerung kann dann aus dem Signal berechnen, in welcher Entfernung sich das Fahrpedal von der Neutralstellung befindet und die elektrische Maschine dann entsprechend ansteuern.

Gemäß einer Ausführungsform der Erfindung ist das Fahrpedal dazu ausgeführt, bei einem Überschreiten der Neutralstellung eine haptische Rückmeldung an den Fahrer zu geben. Das Fahrpedal kann also als aktives Fahrpedal ausgeführt sein, d.h. es kann aufgrund von Steuerbefehlen der Steuerung dem Fahrer abhängig vom Fahrzustand bzw. Fahrzeugzustand eine haptische Rückmeldung geben.

Gemäß einer Ausführungsform der Erfindung ist das Fahrpedal dazu ausgeführt, beim Überschreiten der Neutralstellung (kurz) zu vibrieren. Das Fahrpedal kann alternativ oder zusätzlich eine mechanische Vorrichtung bzw. Aktuator (beispielsweise einen Magneten) umfassen, die dazu ausgeführt ist, aufgrund eines Steuerbefehls von der Steuerung das Fahrpedal vibrieren zu lassen. Gemäß einer Ausführungsform der Erfindung ist das Fahrpedal dazu ausgeführt, beim Überschreiten der Neutralstellung eine erhöhte Rückstellkraft einzustellen. Das Fahrpedal kann dazu ausgeführt sein, beispielsweise aufgrund von Steuersignalen der Steuerung an einen Stellmotor des Fahrpedals, eine (variable) Rückstellkraft bzw. Gegenkraft aktiv einzustellen.

Gemäß einer Ausführungsform der Erfindung ist das System bzw. die Steuerung dazu ausgeführt, das Fahrzeug im Leerlaufbetrieb zu betreiben bzw. die elektrische Maschine oder den Antrieb abzuschalten, beispielsweise wenn sich das Fahrpedal in der Neutralstellung oder in einem Freilaufbereich befindet.

Gemäß einer Ausführungsform der Erfindung ist das System bzw. die Steuerung dazu ausgeführt, das Fahrzeug umso stärker zu beschleunigen, je weiter das Fahrpedal im Beschleunigungsbereich von der Neutralstellung entfernt ist. Wird das Fahrpedal vom Fahrer in eine erste Richtung über die Neutralstellung hinaus bewegt, so befindet sich das Fahrzeug im Schubbetrieb.

Gemäß einer Ausführungsform der Erfindung ist das System bzw. die Steuerung dazu ausgeführt, das Fahrzeug umso stärker zu verzögern, je weiter das Fahrpedal im Verzögerungsbereich von der Neutralstellung entfernt ist. Wird das Fahrpedal vom Fahrer in eine zweite Richtung über die Neutralstellung hinaus bewegt, befindet sich das Fahrzeug im Verzögerungsbetrieb. Auf diese Weise kann der Fahrer durch das Fahrpedal auch die Höhe der Bremsverzögerung einstellen.

Die haptische Rückmeldung des Fahrpedals kann dabei abgegeben werden, wenn das Fahrpedal die Neutralstellung von dem Beschleunigungsbereich zu dem Verzögerungsbereich durchschreitet und/oder wenn das Fahrpedal die Neutralstellung von dem Verzögerungsbereich zu dem Beschleunigungsbereich durchschreitet.

Gemäß einer Ausführungsform der Erfindung nimmt die Verzögerung in diskreten Verzögerungsstufen mit der Entfernung zur Neutralstellung zu. Beispielsweise kann die Verzögerung durch die elektrische Maschine in wenigstens zwei Verzögerungsstufen durchgeführt werden, beispielsweise drei Verzögerungsstufen mit leichter, mittlerer und maximaler Verzögerung. Die verschiedenen Verzögerungsstufen können dadurch ausgelöst werden, dass das Fahrpedal in bestimmte Teilbereiche des Verzögerungsbereichs eintritt bzw. sich darin befindet.

Gemäß einer Ausführungsform der Erfindung nimmt die Verzögerung kontinuierlich mit der Entfernung zur Neutralstellung zu. Beispielsweise hat der Verzögerungsbereich eine Endstellung, die am gegenüberliegenden Ende zur Neutralstellung liegt. Durch die Rückstellkraft einer Feder des Fahrpedals kann sich das Fahrpedal ohne Betätigung durch den Fahrer in der Endstellung befinden. In diesem Fall verzögert das Fahrzeug ohne Fahrpedalbetätigung des Fahrers in der Endstellung maximal. Der Fahrer kann dann durch die Fahrpedalbetätigung (zwischen der Endstellung und der Neutralstellung) jeweils die Verzögerung reduzieren, bis es bei der Neutralstellung zu keiner Verzögerung mehr kommt.

Gemäß einer Ausführungsform der Erfindung weist das Fahrpedal zwischen dem Verzögerungsbereich und der Neutralstellung, beispielsweise unterhalb der Neutralstellung, eine Freilaufstellung auf. Das Fahrpedal ist dazu ausgeführt beim Überschreiten und/oder beim Erreichen der Freilaufstellung eine haptische Rückmeldung an den Fahrer abzugeben. Die Freilaufstellung kann ein Freilaufbereich des Fahrpedalwegs sein. Genauso kann die Neutralstellung ein Ruhebereich des Fahrpedalwegs sein. Der Freilaufbereich kann als Teilbereich des Ruhebereichs aufgefasst werden. Der Fahrpedalweg kann damit in dieser Reihenfolge einen Verzögerungsbereich, einen Freilaufbereich, einen Ruhebereich und einen Beschleunigungsbereich umfassen.

Gemäß einer Ausführungsform der Erfindung ist das System bzw. die Steuerung dazu ausgeführt, eine Kupplung zu öffnen, wenn sich das Fahrpedal in der Freilaufstellung befindet. Der Freilauf des Fahrzeugs kann also durch Öffnen der Kupplung, die beispielsweise den Motor vom Rest des Antriebs trennt, erreicht werden. Die Kupplung kann nur dann geöffnet werden, wenn sich das Fahrpedal für einen vordefinierten Zeitraum in der Freilaufstellung befindet. Der Freilauf wird beispielsweise nicht aktiviert, wenn die Freilaufstellung schnell durchschritten wird, also in einem Zeitraum, der kleiner als der oben erwähnte vordefinierte Zeitraum ist.

Gemäß einer Ausführungsform der Erfindung umfasst das System weiter eine Anzeigeeinrichtung, die dazu ausgeführt ist, die Bremsverzögerung anzuzeigen. Diese Anzeigevorrichtung kann beispielsweise eine Lampe im Cockpit sein, die leuchtet, wenn sich die elektrische Maschine im Generatorbetrieb befindet. Auch ist es möglich, dass die oben genannten Verzögerungsstufen von der Anzeige angezeigt werden.

Ein weiterer Aspekt der Erfindung betrifft ein Verfahren zum Steuern eines Fahrzeugs. Dieses Verfahren kann beispielsweise von der oben genannten Steuerung des Fahrzeugs ausgeführt werden. Dabei ist zu verstehen, dass Merkmale des Fahrzeugs und insbesondere Merkmale der Steuerung Merkmale des Verfahrens sein können und umgekehrt.

Gemäß einer Ausführungsform der Erfindung umfasst das Verfahren die Schritte von: Erfassen einer Stellung eines Fahrpedals; Beschleunigen des in einem Motorbetrieb einer elektrischen Maschine des Fahrzeugs bei der Stellung des Fahrpedals in einem Beschleunigungsbereich; und Verzögern des Fahrzeugs in einem Generatorbetrieb der elektrischen Maschine bei einer Stellung des Fahrpedals in einem Verzögerungsbereich. Die Steuerung kann also abhängig davon, ob sich das Fahrpedal oberhalb oder unterhalb (bzw. in einem Bereich neben) der Neutralstellung befindet, die elektrische Maschine im Motorbetrieb oder im Generatorbetrieb betreiben.

Gemäß einer Ausführungsform der Erfindung umfasst das Verfahren den Schritt von Ausgeben einer haptischen Rückmeldung über das Fahrpedal, wenn das Fahrpedal die Neutralstellung durchschreitet.

Ein weiterer Aspekt der Erfindung betrifft ein Computerprogamm, das, wenn es auf einem Prozessor ausgeführt wird, den Prozessor dazu anleitet, die Schritte des Verfahrens zum Steuern eines aktiven Fahrpedals durchzuführen. Ein weiterer Aspekt der Erfindung betrifft ein computerlesbares Medium, auf dem ein derartiges Computerprogramm gespeichert ist. Beispielsweise kann die Steuerung des Fahrzeugs einen Prozessor und einen nicht-flüchtigen Speicher (ROM, EPROM usw.) umfassen, auf dem das Computerprogramm gespeichert ist.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt schematisch ein Fahrzeug gemäß einer Ausführungsform der Erfindung.
Fig. 2 zeigt schematisch ein Fahrpedal gemäß einer Ausführungsform der Erfindung.
Fig. 3 zeigt ein Diagramm mit einer Kraftkurve für ein Fahrpedal gemäß einer Ausführungsform der Erfindung.
Fig. 4 zeigt ein Flussdiagramm für ein Verfahren zum Steuern eines Fahrzeugs gemäß einer Ausführungsform der Erfindung.

Grundsätzlich sind identische oder ähnliche Teile mit den gleichen Bezugszeichen versehen.

### DETAILIERTE BESCHREIBUNG VON AUSFÜHRUNGSBEISPIELEN

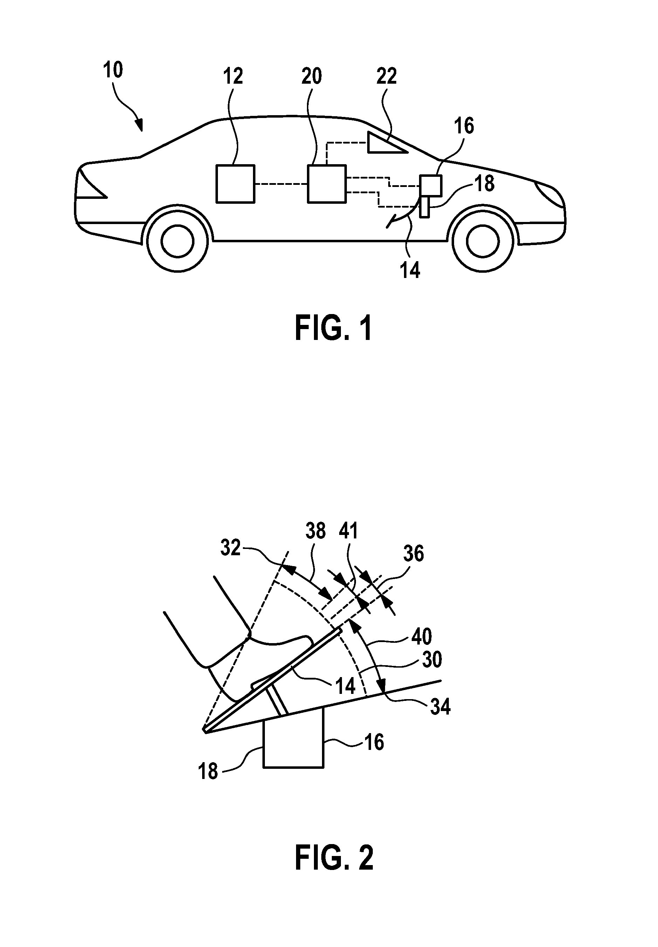

Fig. 1 zeigt ein Fahrzeug 10, beispielsweise ein Elektrofahrzeug mit einer elektrischen Maschine 12, die dazu ausgeführt ist, dass Fahrzeug 10 in einem Motorbetrieb anzutreiben und in einem Generatorbetrieb zu verzögern.

Weiter umfasst das Fahrzeug 10 ein aktives Fahrpedal 14 mit einem Aktuator 16, der ein Stellmotor 16 sein kann, der dazu ausgeführt ist, die durch das Fahrpedal 14 erzeugte Gegenkraft zu erhöhen und einen Fahrpedalwegsensor 18, der dazu ausgeführt ist, die aktuelle Position bzw. Stellung des Fahrpedals 14 zu bestimmen.

Eine Steuerung 20 des Fahrzeugs 10 ist dazu ausgeführt, die elektrische Maschine 12 zu steuern, d.h. die abgegeben Leistung der elektrischen Maschine 12 im Motorbetrieb und die aufgenommene Leistung der elektrischen Maschine 12 im Generatorbetrieb einzustellen. Weiter kann die Steuerung 20 den Aktuator 16 des Fahrpedals ansteuern, beispielsweise die Rückstellkraft des Fahrpedals 14 erhöhen, und ein Signal von dem Sensor 18 empfangen, das die aktuelle Position des Fahrpedals 14 kodiert.

Das Fahrzeug 10 umfasst eine Anzeige 22, etwa eine Lampe oder ein Bildschirm, im Cockpit des Fahrzeugs 10, mit der dem Fahrer angezeigt werden kann, dass sich das Fahrzeug 10 im Verzögerungsbetrieb befindet. Die Steuerung 10 kann dazu ein entsprechendes Steuerungssignal an die Anzeige 22 senden.

Fig. 2 zeigt ein Fahrpedal 14 detaillierter. Das Fahrpedal 14 ist in einem Fahrpedalweg 30 zwischen einer ersten Endstellung 32 und einer zweiten Endstellung 34 bewegbar. Wirkt keine Kraft auf das Fahrpedal 14 wird es durch die Rückstellkraft in die erste Endstellung 32 bewegt. Von der Endstellung 32 aus kann der Fahrer das Fahrpedal bis in die zweite Endstellung 34 durchdrücken.

Zwischen denen Endstellungen 32, 34 befindet sich eine Neutralstellung 36 bzw. ein Neutralstellungsbereich 36. Bezüglich des Fahrpedalwegs 30 weist das Fahrpedal 14 auf der einen Seite der Neutralstellung 36 einen Freilaufbereich 41 und einen Verzögerungsbereich 38 sowie auf der anderen Seite der Neutralstellung 36 einen Beschleunigungsbereich 40 auf. Die Steuerung 20 kann über den Sensor 18 die aktuelle Stellung des Fahrpedals 14 ermitteln und bei einer Stellung des Fahrpedals 14 im Beschleunigungsbereich 40 das Fahrzeug 10 im Motorbetrieb beschleunigen und bei einer Stellung des Fahrpedals 14 im Verzögerungsbereich 38 das Fahrzeug 10 im Generatorbetrieb verzögern.

Zwischen dem Verzögerungsbereich 38 und der Neutralstellung 36 kann sich optional der Freilaufbereich 41 befinden. Bei einer Stellung des Fahrpedals 14 im Freilaufbereich 41, kann das Fahrzeug 10 von der Steuerung 20 in einen Freilaufbetrieb überführt werden, in der der Antriebsstrang durch eine Kupplung getrennt ist.

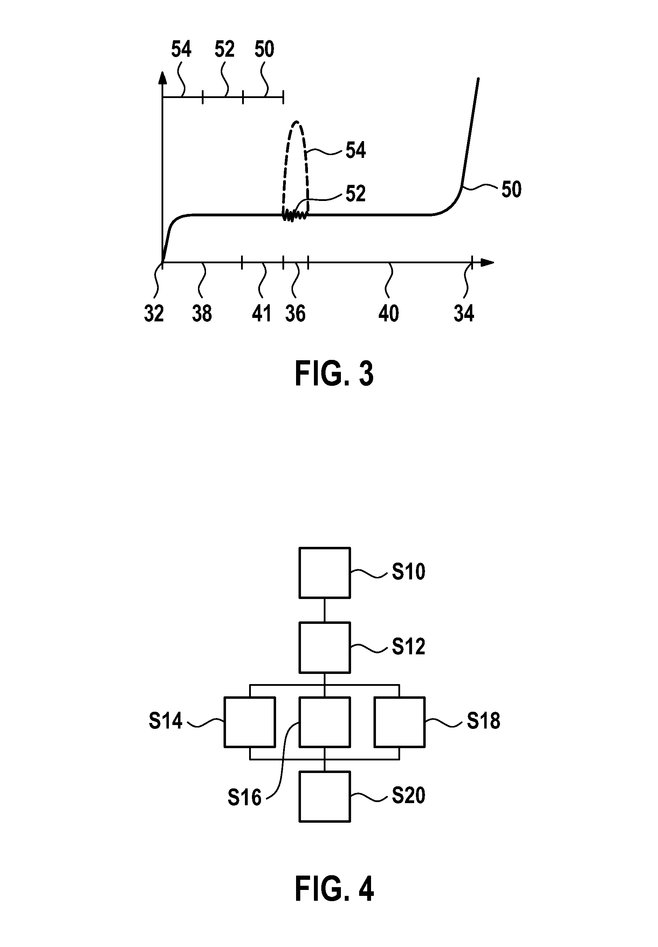

Fig. 3 zeigt ein Diagramm mit einer Kraftkurve 50 für das Fahrpedal 14. In dem Diagramm ist die Rückstellkraft des Fahrpedals 14 nach oben und der Fahrpedalweg 30 nach rechts aufgetragen. In der Endstellung 32, in der sich das Fahrpedal ohne äußere Kraftwirkung befindet, ist die Kraft 0, danach ist sie im Wesentlichen konstant bzw. leicht ansteigend. Kurz vor der Endstellung 34 steigt die Rückstellkraft stark an.

Das Fahrpedal 10 ist dazu ausgeführt, bei einem Überschreiten der Neutralstellung 36 eine haptische Rückmeldung an den Fahrer zu geben. Dazu kann die Steuerung 20 über den Sensor 18 kontinuierlich (bzw. in kurzen Zeitabständen) ermitteln, an welcher Position im Fahrpedalweg 30 sich das Fahrpedal 14 befindet und daraus ableiten, dass es sich in der Ruheposition 36 befindet, dass es die Ruheposition 36 aus Richtung des Verzögerungsbereichs 38 (bzw. des Freilaufbereichs 41) betreten oder die Ruheposition 36 aus der Richtung des Beschleunigungsbereichs 40 betreten hat. Immer dann, wenn das Fahrpedal 14, den Bereich 36 des Fahrpedalwegs 30 betritt oder diesen Bereich verlässt, kann die Steuerung 20 den Aktuator 16 anweisen, Vibrationen 52 zu erzeugen.

Alternativ oder zusätzlich kann die Steuerung 20 den Aktuator 16 dazu anweisen, die Rückstellkraft 52 im Bereich der Neutralstellung 36 über die Grundkraft 50 hinaus zu erhöhen. Auf diese Weise muss der Fahrer eine stärke Kraft aufwenden, um vom Verzögerungsbereich 38 in den Beschleunigungsbereich 40 zu gelangen.

Als weitere Alternative oder zusätzlich zu dem eben Beschriebenen kann eine oder beide der haptischen Rückmeldungen 52, 54 beim Eintritt oder beim Verlassen des Freilaufbereichs 41 erzeugt werden.

Fig. 4 zeigt ein Flussdiagramm für ein Verfahren zum Steuern des Fahrzeugs 10.

Im Schritt S10 erfasst die Steuerung 20, die Stellung des Fahrpedals 14.

Im Schritt S12 wertet die Steuerung 20, die aktuelle Stellung des Fahrpedals 14 aus.

Befindet sich das Fahrpedal in der Neutralstellung 36 und/oder in der Freilaufstellung 41, weist die Steuerung 20 im Schritt S14 das Fahrpedal 14 dazu an, die Rückstellkraft 54 zu erhöhen. Wird der Bereich der Neutralstellung 36 und/oder der Freilaufstellung 41 gerade betreten (oder verlassen), weist die Steuerung 20 das Fahrpedal zusätzlich an, kurzzeitig Vibrationen 52 zu erzeugen.

Erkennt die Steuerung im Schritt S14, dass sich das Fahrpedal 14 bereits für einen vordefinierten Zeitraum in der Freilaufstellung 41 befindet, wird das Fahrzeug 10 in den Freilauf überführt.

Befindet sich das Fahrpedal 14 im Beschleunigungsbereich 40, berechnet die Steuerung 20 im Schritt S16, den Abstand der aktuellen Position des Fahrpedals 14 zur Neutralstellung und steuert die elektrische Maschine 12 entsprechend im Motorbetrieb.

Befindet sich das Fahrpedal 14 im Beschleunigungsbereich 40, berechnet die Steuerung 20 im Schritt S18, den Abstand der aktuellen Position des Fahrpedals 14 zur Neutralstellung und steuert die elektrische Maschine 12 im Generatorbetrieb. Die Verzögerung kann entweder kontinuierlich mit dem Abstand zur Neutralstellung 36 erhöht werden oder aber in Stufen.

Mit Bezug auf die Fig. 3 kann beispielsweise die Verzögerung auf einen ersten Wert erhöht werden, wenn sich das Fahrpedal im Bereich 50 befindet, auf einen zweiten höheren Wert im Bereich 52 und auf einen maximalen Wert im Bereich 54.

Im Schritt S20 weist die Steuerung 20 die Anzeige 22 dazu an, anzuzeigen, ob sich das Fahrzeug 10 im Generatorbetrieb befindet und eventuell die aktuelle Verzögerungsstärke bzw. die aktuelle Verzögerungsstufe.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System für ein Fahrzeug (10), umfassend:
eine elektrischen Maschine (12) zum Antrieb des Fahrzeugs (10);
ein Fahrpedal (14) zum Einstellen der Beschleunigung des Fahrzeugs (10) durch einen Fahrer;
wobei die elektrische Maschine (12) dazu ausgeführt ist, in einem Motorbetrieb das Fahrzeug (10) zu beschleunigen und in einem Generatorbetrieb das Fahrzeug (10) zu verzögern;
**dadurch gekennzeichnet, dass**
das Fahrpedal (14) einen Fahrpedalweg (30) mit einem Beschleunigungsbereich (40), einem Verzögerungsbereich (38) und einer dazwischenliegenden Neutralstellung (36) aufweist;
wobei das System (10) dazu ausgeführt ist, bei einer Stellung des Fahrpedals (14) im Beschleunigungsbereich (40) das Fahrzeug (10) im Motorbetrieb zu beschleunigen und bei einer Stellung im Verzögerungsbereich (38) das Fahrzeug (10) im Generatorbetrieb zu verzögern.

2. System nach Anspruch 1,
wobei das Fahrpedal (14) dazu ausgeführt ist, bei einem Überschreiten der Neutralstellung (36) eine haptische Rückmeldung (52, 54) an den Fahrer zu geben.

3. System nach Anspruch 1 oder 2,
wobei das Fahrpedal (14) dazu ausgeführt ist, beim Überschreiten der Neutralstellung (36) zu vibrieren (52).

4. System nach einem der vorhergehenden Ansprüche,
wobei das Fahrpedal (14) dazu ausgeführt ist, beim Überschreiten der Neutralstellung (36) eine erhöhte Rückstellkraft (54) einzustellen.

5. System nach einem der vorhergehenden Ansprüche,
wobei das System (10) dazu ausgeführt ist, das Fahrzeug (10) um so stärker zu beschleunigen, je weiter das Fahrpedal (14) im Beschleunigungsbereich (40) von der Neutralstellung entfernt (36) ist;
wobei das System (10) dazu ausgeführt ist, das Fahrzeug (10) um so stärker zu verzögern, je weiter das Fahrpedal (14) im Verzögerungsbereich (38) von der Neutralstellung (36) entfernt ist.

6. System nach einem der vorhergehenden Ansprüche,
wobei die Verzögerung in diskreten Verzögerungsstufen mit der Entfernung zur Neutralstellung (36) zunimmt.

7. System nach einem der Ansprüche 1 bis 5,
wobei die Verzögerung kontinuierlich mit der Entfernung zur Neutralstellung (36) zunimmt.

8. System nach einem der vorhergehenden Ansprüche,
wobei das Fahrpedal (14) zwischen dem Verzögerungsbereich (38) und der Neutralstellung (36) eine Freilaufstellung (41) aufweist,
wobei das Fahrpedal dazu ausgeführt ist beim Überschreiten und/oder beim Erreichen der Freilaufstellung (41) eine haptische Rückmeldung (52, 54) an den Fahrer abzugeben.

9. System nach einem der vorhergehenden Ansprüche,
wobei das System dazu ausgeführt ist, eine Kupplung zu öffnen, wenn sich das Fahrpedal (14) in der Freilaufstellung (41) befindet und/oder wenn sich das Fahrpedal für einen vordefinierten Zeitraum in der Freilaufstellung (41) befindet.

10. System nach einem der vorhergehenden Ansprüche, weiter umfassend:
eine Anzeigeeinrichtung (22), die dazu ausgeführt ist, die Bremsverzögerung anzuzeigen.

11. Verfahren zum Steuern eines Fahrzeugs (10), umfassend die Schritte:
Erfassen einer Stellung eines Fahrpedals (14);
Beschleunigen des Fahrzeugs (10) in einem Motorbetrieb einer elektrischen Maschine (12) des Fahrzeugs (10), bei der Stellung des Fahrpedals (14) in einem Beschleunigungsbereich (40) eines Fahrpedalwegs (30);
Verzögern des Fahrzeugs (10) in einem Generatorbetrieb der elektrischen Maschine (12) bei der Stellung des Fahrpedals (14) in einem Verzögerungsbereich (438) des Fahrpedalwegs (30).

12. Verfahren nach Anspruch 11, weiter umfassend den Schritt:
Ausgeben einer haptischen Rückmeldung (52, 54) über das Fahrpedal (14),
wenn das Fahrpedal (14) eine Neutralstellung (36) zwischen dem Beschleunigungsbereich (40) und dem Verzögerungsbereich (38) durchschreitet.

13. Computerprogamm, das, wenn es auf einem Prozessor ausgeführt wird, den Prozessor dazu anleitet, die Schritte des Verfahrens nach Anspruch 11 oder 12 auszuführen.

14. Computerlesbares Medium, auf dem ein Computerprogramm nach Anspruch 13 gespeichert ist.
